# EUROPEAN PATENT APPLICATION

(11) **EP 2 728 946 A1**
(43) Date of publication of application: **07.05.2014**
(21) Application number: 12822102.5
(22) Date of filing: 06.08.2012
(51) Int. Cl.: H04W 56/00

(54) **METHOD FOR DETERMINING THE TIMING ADVANCE TA , METHOD AND DEVICE FOR TRANSMITTING THE INFORMATION**

(30) Priority: 05.08.2011 CN 201110223793
(71) Applicant: Huawei Technologies Co., Ltd, Shenzhen, Guangdong 518129 (CN)
(72) Inventor: ZHOU, Mingyu, Shenzhen Guangdong 518129 (CN); QU, Bingyu, Shenzhen Guangdong 518129 (CN)
(74) Representative: Goddar, Heinz J.
(86) International application number: PCT/CN2012/079729
(87) International publication number: WO 2013/020490

(57) **Abstract**

Embodiments of the present invention provide a method for determining a timing advance TA, and a method and a device for transmitting information. A method includes: receiving downlink signal characteristic information of each transceiver node in a first transceiver node set in a cell accessed by a terminal, where the first transceiver node set includes one or more transceiver nodes; detecting, according to the downlink signal characteristic information of each transceiver node in the first transceiver node set, time at which a downlink signal transmitted by each transceiver node in the first transceiver node set arrives at the terminal; and determining, according to the time at which the downlink signal transmitted by each transceiver node in the first transceiver node set arrives at the terminal, a timing advance TA for transmitting an uplink signal to each transceiver node in the first transceiver node set. With the embodiments of the present invention, the determined TA is more accurate, an uplink signal transmitted by a UE arrives, at expected time more accurately, at a transceiver node receiving the uplink signal, and performance of the transceiver node is improved.

## Description

### CROSS-REFERENCE TO RELATED APPLICATION

This application claims priority to Chinese Patent Application No. 201110223793.X, filed with the Chinese Patent Office on August 5, 2011 and entitled "METHOD FOR DETERMINING TIMING ADVANCE TA, AND METHOD AND DEVICE FOR TRANSMITTING INFORMATION", which is incorporated herein by reference in its entirety.

### TECHNICAL FIELD

The present invention relates to the field of communications technologies, and in particular, to a method for determining a timing advance, and a method and a device for transmitting information.

### BACKGROUND

In a distributed antenna system (Distributed Antenna System, DAS), each cell includes multiple transceiver nodes having a transceiver apparatus, where these transceiver nodes are geographically distributed to shorten the transmission distance of radio signals between the transceiver nodes and a user equipment (User Equipment, UE) that accesses the cell, and further make channel conditions better than those of a conventional radio communication system.

Because one transceiver node receives uplink signals transmitted by multiple UEs, to avoid mutual interference between the uplink signals of the multiple UEs, it is generally required that the uplink signals transmitted by the multiple UEs to the same transceiver node should arrive at the transceiver node at the same time. A timing advance (Timing Advance, TA) is used to indicate a timing advance for each UE to transmit an uplink signal, and the TA value is D/c, where D represents the transmission distance of a radio signal between the UE and a transceiver node, and c represents the transmission speed of an electromagnetic wave. Due to mobility of the UE, the transmission distance D of the radio signal between the UE and the transceiver node changes constantly. Therefore, the UE needs to adjust the TA value constantly to ensure that an error between the time when the uplink signal transmitted by the UE arrives at the transceiver node and the arrival time expected by the transceiver node is within an acceptable range.

In the prior art, when only one transceiver node in a cell transmits downlink signals to a UE and receives uplink signals transmitted by the UE, the UE determines a TA value according to earliest arrival time of the downlink signals transmitted by the transceiver node. However, when multiple transceiver nodes in the cell transmit downlink signals to the UE but only a part of the transceiver nodes receive uplink signals transmitted by the UE, if the UE determines a TA value according to earliest arrival time of the received downlink signals, accuracy of the TA is affected. Consequently, the uplink signals transmitted by the UE can hardly arrive, at the expected time, at the transceiver nodes receiving the uplink signals, and further, performance of these transceiver nodes is affected.

### SUMMARY

Embodiments of the present invention provide a method for determining a timing advance TA, and a method and a device for transmitting information, so that an uplink signal transmitted by a UE arrives, at expected time more accurately, at a transceiver node receiving the uplink signal.

In one aspect, an embodiment of the present invention provides a method for determining a timing advance TA, including:
receiving downlink signal characteristic information of each transceiver node in a first transceiver node set in a cell accessed by a terminal, where the first transceiver node set includes one or more transceiver nodes;
detecting, according to the downlink signal characteristic information of each transceiver node in the first transceiver node set, time at which a downlink signal transmitted by each transceiver node in the first transceiver node set arrives at the terminal; and
determining, according to the time at which the downlink signal transmitted by each transceiver node in the first transceiver node set arrives at the terminal, a timing advance TA for transmitting an uplink signal to each transceiver node in the first transceiver node set.

An embodiment of the present invention further provides a method for transmitting information, including:
determining a first transceiver node set that receives an uplink signal of a terminal, where the first transceiver node set includes one or more transceiver nodes; and
transmitting a first control command to one or more transceiver nodes in a cell accessed by the terminal, where the first control command is an instruction for transmitting downlink signal characteristic information of the one or more transceiver nodes in the first transceiver node set to the terminal.

An embodiment of the present invention further provides a method for transmitting information, including:
receiving a first control command transmitted by a base station, where the first control command is an instruction for transmitting downlink signal characteristic information of one or more transceiver nodes in the first transceiver node set to the terminal, where the first transceiver node set includes the one or more transceiver nodes, and the first transceiver node set includes or does not include a local transceiver node; and
transmitting downlink signal characteristic information of the one or more transceiver nodes in the first transceiver node set to the terminal.

In another aspect, an embodiment of the present invention further provides a terminal, including:
a receiver, configured to receive downlink signal characteristic information of each transceiver node in a first transceiver node set in a cell accessed by the terminal, where the first transceiver node set includes one or more transceiver nodes;
a monitor, configured to detect, according to the downlink signal characteristic information of each transceiver node in the first transceiver node set, time at which a downlink signal transmitted by each transceiver node in the first transceiver node set arrives at the terminal; and
a processor, configured to determine, according to the time at which the downlink signal transmitted by each transceiver node in the first transceiver node set arrives at the terminal, a timing advance TA for transmitting an uplink signal to each transceiver node in the first transceiver node set.

An embodiment of the present invention further provides a base station, including:
a processor, configured to determine a first transceiver node set that receives an uplink signal of a terminal, where the first transceiver node set includes one or more transceiver nodes; and
a transmitter, configured to transmit a first control command to one or more transceiver nodes in a cell accessed by the terminal, where the first control command is an instruction for transmitting downlink signal characteristic information of the one or more transceiver nodes in the first transceiver node set to the terminal.

An embodiment of the present invention further provides a transceiver node, including:
a receiver, configured to receive a first control command transmitted by a base station, where the first control command is an instruction for transmitting downlink signal characteristic information of one or more transceiver nodes in the first transceiver node set to the terminal, where the first transceiver node set includes the one or more transceiver nodes, and the first transceiver node set includes or does not include the local transceiver node; and
a transmitter, configured to transmit the downlink signal characteristic information of the one or more transceiver nodes in the first transceiver node set to the terminal.

By using the method for determining a timing advance TA, and the method and the device for transmitting information according to the embodiments of the present invention, a terminal detects, according to downlink signal characteristic information of one or more transceiver nodes in an accessed cell, time at which the corresponding one or more downlink signals arrive, and thereby determines a timing advance TA for transmitting an uplink signal to the one or more transceiver nodes. Therefore, the determined TA is more accurate, an uplink signal transmitted by a UE arrives, at expected time more accurately, at a transceiver node receiving the uplink signal, and performance of the transceiver node is improved.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of an embodiment of a method for determining a timing advance TA according to the present invention;
FIG. 2 is a flowchart of an embodiment of a method for transmitting information according to the present invention;
FIG. 3 is a flowchart of another embodiment of a method for transmitting information according to the present invention;
FIG. 4 is a flowchart of another embodiment of a method for determining a timing advance TA according to the present invention;
FIG. 5 is a schematic time sequence diagram of receiving a CRS and a CSI-RS by a terminal;
FIG. 6 is a flowchart of another embodiment of a method for determining a timing advance TA according to the present invention;
FIG. 7 is a flowchart of another embodiment of a method for determining a timing advance TA according to the present invention;
FIG. 8 is a flowchart of another embodiment of a method for determining a timing advance TA according to the present invention;
FIG. 9 is a schematic structural diagram of an embodiment of a terminal executing the method for determining a timing advance TA according to the present invention;
FIG. 10 is a schematic structural diagram of an embodiment of a base station executing the method for transmitting information according to an embodiment of the present invention;
FIG. 11 is a schematic structural diagram of another embodiment of a base station executing the method for transmitting information according to an embodiment of the present invention; and
FIG. 12 is a schematic structural diagram of an embodiment of a transceiver node executing the method for transmitting information according to the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

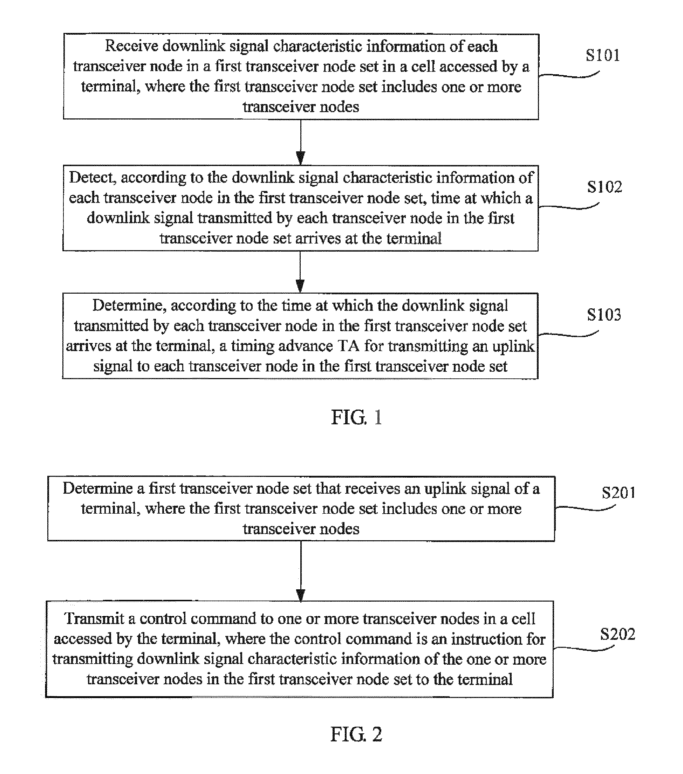

FIG. 1 is a flowchart of an embodiment of a method for determining a timing advance TA according to the present invention. As shown in FIG. 1, the method includes the following:
S101. Receive downlink signal characteristic information of each transceiver node in a first transceiver node set in a cell accessed by a terminal, where the first transceiver node set includes one or more transceiver nodes.
S102. Detect, according to the downlink signal characteristic information of each transceiver node in the first transceiver node set, time at which a downlink signal transmitted by each transceiver node in the first transceiver node set arrives at the terminal.
S 103. Determine, according to the time at which the downlink signal transmitted by each transceiver node in the first transceiver node set arrives at the terminal, a timing advance TA for transmitting an uplink signal to each transceiver node in the first transceiver node set.

The executor of the above steps is a terminal.

In the embodiment of the present invention, multiple transceiver nodes in the cell accessed by the terminal transmit downlink signals to the terminal. All the transceiver nodes transmitting downlink signals may be used to receive uplink signals transmitted by the terminal, or a part (one or more) of the transceiver nodes transmitting downlink signals are used to receive uplink signals transmitted by the terminal. The multiple transceiver nodes in the cell accessed by the terminal may be devices having a transceiver function, such as an access point (Access Point, AP), a remote radio equipment (Remote Radio Equipment, RRE), a remote radio head (Remote Radio Head, RRH), a remote radio unit (Remote Radio Unit, RRU), and a base station or a home base station, which are not further enumerated herein.

In this embodiment, each transceiver node in the first transceiver node set may be a transceiver node receiving an uplink signal of the terminal. Each transceiver node in the first transceiver node set may transmit downlink signal characteristic information of the local transceiver node to the terminal. Or, any transceiver node in the first transceiver node set may transmit downlink signal characteristic information of the local transceiver node and other transceiver nodes in the first transceiver node set to the terminal. It may be understood that other transceiver nodes except the first transceiver node set in the cell accessed by the terminal may also transmit downlink signal characteristic information of one or more transceiver nodes in the first transceiver node set to the terminal. That is, in the embodiment of the present invention, the transceiver node transmitting downlink signal characteristic information to the terminal is not limited.

In a feasible implementation manner, the downlink signal characteristic information may be an antenna number or antenna port number for transmitting a reference signal in the transceiver node. This is because the antenna or antenna port corresponding to each transceiver node is different, and reference signals transmitted by different antennas or antenna ports are different, but the number of the reference signal transmitted by each antenna or antenna port is the same as the corresponding antenna number or antenna port number. Therefore, the antenna number or antenna port number for transmitting a reference signal in the transceiver node may be transmitted to the terminal. The terminal may detect arrival time of the reference signal transmitted by the corresponding antenna or antenna port, thereby determining a timing advance TA for transmitting an uplink signal to each transceiver node in the first transceiver node set.

In another feasible implementation manner, the downlink signal characteristic information may also be a number of a channel state information reference signal (Channel State Information-Reference Signal, CSI-RS) transmitted by the transceiver node. This is because CSI-RSs transmitted by different transceiver nodes are different. Therefore, numbers of CSI-RSs transmitted by the transceiver nodes may be transmitted to the terminal. The terminal may detect the arrival time of the CSI-RSs corresponding to the CSI-RS numbers, thereby determining a timing advance TA for transmitting an uplink signal to each transceiver node in the first transceiver node set.

The above provides only a specific example of downlink signal characteristic information. It may be understood that the downlink signal characteristic information may also be other types of characteristic information, which may be used to distinguish downlink signals transmitted by different transceiver nodes, and are not further enumerated herein.

If the first transceiver node set includes a transceiver node, the terminal may detect time at which a downlink signal transmitted by the transceiver node arrives at the terminal, and determine, according to the time at which the downlink signal transmitted by the transceiver node arrives at the terminal, a TA for transmitting an uplink signal to the transceiver node.

Specifically, when the terminal accesses a cell, the terminal transmits an uplink signal on a shared channel of the cell within a short period of time after the terminal receives for the first time a downlink signal transmitted by a transceiver node in the cell. The transceiver node that earliest receives the uplink signal of the terminal delivers an initial TA to the terminal according to the time at which the uplink signal arrives at the local transceiver node and the expected time at which the uplink signal arrives at the local transceiver node. After the transmission distance of radio signals between the terminal and the transceiver node changes (for ease of description, hereinafter referred to as the change of the distance between the terminal and the transceiver node in the embodiment of the present invention), the terminal uses the initial TA for reference, and determines a TA after the change of the distance according to the sum of the initial TA and the time difference of the arrival time of the downlink signal of the transceiver node before and after the change of the distance. As long as the distance between the terminal and the transceiver node changes, the terminal determines the TA after the change of the distance according to the sum of the last determined TA and the time difference of arrival time of the downlink signal of the transceiver node before and after the change of the distance.

If the first transceiver node set includes multiple transceiver nodes, the terminal may determine, according to time at which a downlink signal arriving earliest at the terminal among downlink signals transmitted by the multiple transceiver nodes arrives at the terminal, a timing advance TA for transmitting an uplink signal to the multiple transceiver nodes. For example, if the first transceiver node set includes transceiver node 1 and transceiver node 2, and a downlink signal transmitted by transceiver node 1 arrives at the terminal earliest, the terminal may determine, according to the signal arriving earliest at the terminal among downlink signals transmitted by transceiver node 1, a TA for transmitting an uplink signal to transceiver node 1 and transceiver node 2.

If the first transceiver node set includes multiple transceiver nodes, the terminal may determine, according to time at which a downlink signal having the highest power among downlink signals transmitted by the multiple transceiver nodes arrives at the terminal, a timing advance TA for transmitting an uplink signal to the multiple transceiver nodes.

This is because among the transceiver nodes receiving the uplink signal transmitted by the terminal, usually a transceiver node having an optimum radio channel with the terminal or a transceiver node having a shortest distance with the terminal earliest receives the uplink signal transmitted by the terminal. Because channel conditions in uplink signal transmission and downlink signal transmission usually have same features, the terminal may determine, according to time at which a downlink signal arriving earliest or having the highest power among downlink signals transmitted by the multiple transceiver nodes in the first transceiver node set arrives at the terminal, a TA for transmitting an uplink signal to the multiple transceiver nodes in the first transceiver node set.

By using the method for determining a timing advance TA according to the embodiment of the present invention, a terminal detects, according to downlink signal characteristic information of one or more transceiver nodes in an accessed cell, time at which the corresponding one or more downlink signals arrive, and thereby determines a timing advance TA for transmitting an uplink signal to the one or more transceiver nodes. Therefore, the determined TA is more accurate, an uplink signal transmitted by a UE arrives, at expected time more accurately, at a transceiver node receiving the uplink signal, and performance of the transceiver node is improved.

FIG 2 is a flowchart of an embodiment of a method for transmitting information according to the present invention. As shown in FIG 2, the method includes the following:
S201. Determine a first transceiver node set that receives an uplink signal of a terminal, where the first transceiver node set includes one or more transceiver nodes.
S202. Transmit a control command to one or more transceiver nodes in a cell accessed by the terminal, where the control command is an instruction for transmitting downlink signal characteristic information of the one or more transceiver nodes in the first transceiver node set to the terminal.

The executor of the above steps is a base station.

The terminal usually transmits a sounding reference signal (Sounding Reference Signal, SRS) to each transceiver node in the accessed cell. Correspondingly, each transceiver node may report the SRS transmitted by the terminal and detected by each transceiver node to the base station. The base station may determine, according to quality of the SRS detected by each transceiver node, one or more transceiver nodes for receiving an uplink signal of the terminal, namely, determine the first transceiver node set.

In addition, each transceiver node in the cell accessed by the terminal may also transmit a channel state information reference signal CSI-RS to the terminal. The terminal may recommend to the base station, according to quality of the CSI-RS transmitted by each transceiver node, a transceiver node for receiving an uplink signal of the terminal, that is, the terminal may transmit recommendation information of the first transceiver node set to the base station. The base station may determine, according to the recommendation information of the first transceiver node set and with reference to factors such as the signal transmission condition between each transceiver node and the terminal, the first transceiver node set that receives the uplink signal of the terminal.

After determining the first transceiver node set, the base station may transmit a first control command to one or more transceiver nodes in the cell accessed by the terminal, instructing the one or more transceiver nodes to transmit downlink signal characteristic information of the one or more transceiver nodes in the first transceiver node set to the terminal.

The transceiver node that transmits the downlink signal characteristic information to the terminal may be a transceiver node in the first transceiver set, or may also be other nodes except the first transceiver set in the cell accessed by the terminal. The transceiver nodes may transmit downlink signal characteristic information of one or more transceiver nodes in the first transceiver set to the terminal, so that the terminal detects, according to the downlink signal characteristic information of each transceiver node in the first transceiver node set, time at which a downlink signal transmitted by each transceiver node in the first transceiver node set arrives at the terminal, and determines, according to the time at which the downlink signal transmitted by each transceiver node in the first transceiver node set arrives at the terminal, a timing advance TA for transmitting an uplink signal to each transceiver node in the first transceiver node set.

In addition, the downlink signal characteristic information of the transceiver node may be an antenna number or antenna port number for transmitting a reference signal in the transceiver node, or may also be a number of a CSI-RS transmitted by the transceiver node. The downlink signal characteristic information may also be other characteristic information that can distinguish downlink signals transmitted by different transceiver nodes.

Each transceiver node in the cell accessed by the terminal usually periodically reports the SRS transmitted by the terminal and detected by each transceiver node to the base station, and quality of the SRS transmitted by the terminal to each transceiver node may also change. Therefore, the base station may further determine, according to quality of the SRS reported by each transceiver node in the cell accessed by the terminal, that transceiver nodes receiving the uplink signal of the terminal change from the first transceiver node set to a second transceiver node set, where the second transceiver node set includes one or more transceiver nodes.

In addition, the channel state information reference signal CSI-RS transmitted by each transceiver node in the cell accessed by the terminal to the terminal may also change. In this case, the transceiver node that is recommended by the terminal to the base station and used for receiving the uplink signal of the terminal may change. Therefore, the base station may further determine, according to the recommendation information of the first transceiver node set transmitted by the terminal and with reference to factors such as the signal transmission condition between each transceiver node and the terminal, that transceiver nodes receiving the uplink signal of the terminal change from the first transceiver node set to a second transceiver node set.

After determining that nodes receiving the uplink signal of the terminal change to the second transceiver node set, the base station may transmit a second control command to one or more transceiver nodes in the cell accessed by the terminal, instructing the one or more transceiver nodes to transmit downlink signal characteristic information of the one or more transceiver nodes in the second transceiver node set to the terminal.

Similarly, the transceiver node receiving the second control command may be a transceiver node in the first transceiver node set, or may also be a transceiver node in the second transceiver node set, or may also be other transceiver nodes except the first transceiver node set and the second transceiver node set in the cell accessed by the terminal. The downlink signal characteristic information of each transceiver node in the second transceiver node set may also be an antenna number or antenna port number for transmitting a reference signal in the transceiver node, or may also be a number of a CSI-RS transmitted by the transceiver node. The downlink signal characteristic information may also be other characteristic information that can distinguish downlink signals transmitted by different transceiver nodes.

By using the method for transmitting information according to the embodiment of the present invention, a base station determines a transceiver node set receiving an uplink signal of a terminal, and instructs one or more transceiver nodes in a cell accessed by the terminal to transmit downlink signal characteristic information of each transceiver node in the transceiver node set to the terminal, so that the terminal can detect arrival time of the corresponding downlink signal according to the downlink signal characteristic information of the transceiver nodes, and thereby determine a timing advance TA for transmitting an uplink signal to each node in the transceiver node set. Therefore, the determined TA is more accurate, an uplink signal transmitted by a UE arrives, at expected time more accurately, at a transceiver node receiving the uplink signal, and performance of the transceiver node is improved.

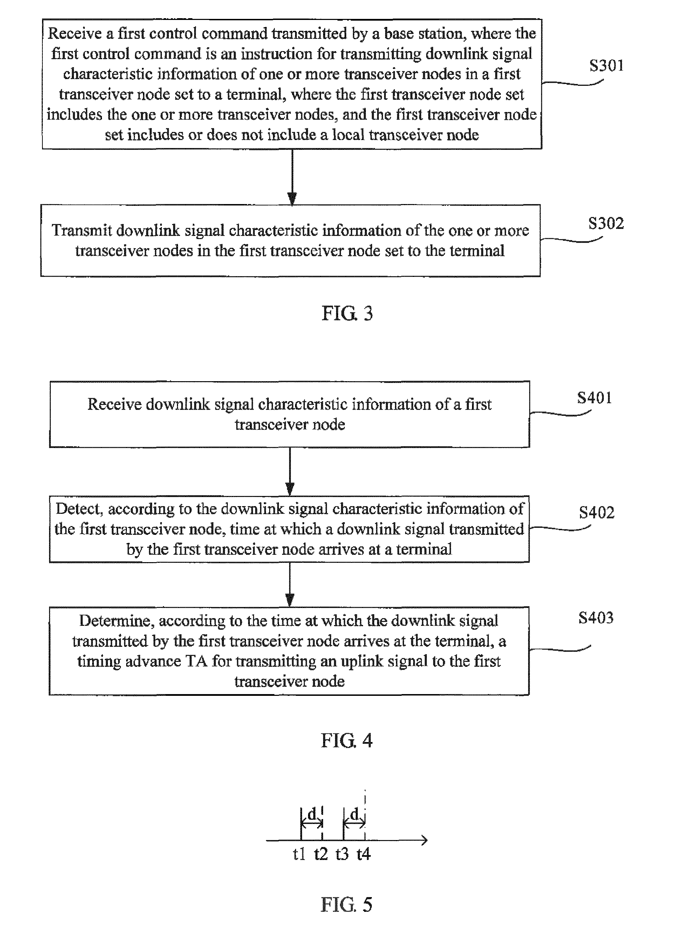

FIG. 3 is a flowchart of another embodiment of a method for transmitting information according to the present invention. As shown in FIG. 3, the method includes the following:
S301. Receive a first control command transmitted by a base station, where the first control command is an instruction for transmitting downlink signal characteristic information of one or more transceiver nodes in a first transceiver node set to a terminal, where the first transceiver node set includes the one or more transceiver nodes, and the first transceiver node set includes or does not include a local transceiver node.
S302. Transmit the downlink signal characteristic information of the one or more transceiver nodes in the first transceiver node set to the terminal.

The executor of this step is a transceiver node, where the transceiver node may be devices having a transceiver function, such as an AP, an RRE, an RRH, an RRU, and a base station or a home base station, which are not further enumerated herein.

The transceiver node may be a transceiver node in the first transceiver set, or may also be other nodes except the first transceiver set in the cell accessed by the terminal. The transceiver node may transmit downlink signal characteristic information of one or more transceiver nodes in the first transceiver set to the terminal after receiving the first control command transmitted by the base station, so that the terminal detects, according to the downlink signal characteristic information of each transceiver node in the first transceiver node set, time at which a downlink signal transmitted by each transceiver node in the first transceiver node set arrives at the terminal, and determines, according to the time at which the downlink signal transmitted by each transceiver node in the first transceiver node set arrives at the terminal, a timing advance TA for transmitting an uplink signal to each transceiver node in the first transceiver node set.

The downlink signal characteristic information transmitted by the transceiver node to the terminal may be an antenna number or antenna port number for transmitting a reference signal in the transceiver node, or may also be a number of a CSI-RS transmitted by the transceiver node. The downlink signal characteristic information may also be other characteristic information that can distinguish downlink signals transmitted by different transceiver nodes.

The downlink signal characteristic information transmitted by the transceiver node may be carried in media access control (Media Access Control, MAC) signaling or radio resource control (Radio Resource Control, RRC) signaling transmitted to the terminal. It may be understood that the transceiver node may also carry the downlink signal characteristic information in other signaling that interacts with the terminal.

When the base station determines that transceiver nodes receiving the uplink signal of the terminal change from the first transceiver node set to a second transceiver node set, the base station may transmit a second control command to one or more transceiver nodes in the cell accessed by the terminal, instructing the one or more transceiver nodes to transmit downlink signal characteristic information of the one or more transceiver nodes in the second transceiver node set to the terminal, where the second transceiver node set may include one or more transceiver nodes.

The transceiver node may transmit the downlink signal characteristic information of the one or more transceiver nodes in the second transceiver node set to the terminal after receiving the second control command transmitted by the base station.

Similarly, the downlink signal characteristic information of each node in the second transceiver node set may be an antenna number or antenna port number for transmitting a reference signal in the transceiver node, or may also be a number of a CSI-RS transmitted by the transceiver node. The downlink signal characteristic information may also be other characteristic information that can distinguish downlink signals transmitted by different transceiver nodes. The downlink signal characteristic information may be carried in the MAC signaling or the RRC signaling transmitted to the terminal. It may be understood that the transceiver node may also carry downlink signal characteristic information in other signaling exchanged with the terminal.

By using the method for transmitting information according to the embodiment of the present invention, a transceiver node may transmit downlink signal characteristic information of one or more transceiver nodes in a cell accessed by a terminal to the terminal after receiving a control command transmitted by a base station. The terminal detects arrival time of the corresponding one or more downlink signals, and thereby determines a timing advance TA for transmitting an uplink signal to the one or more transceiver nodes. Therefore, the determined TA is more accurate, an uplink signal transmitted by a UE arrives, at expected time more accurately, at a transceiver node receiving the uplink signal, and performance of the transceiver node is improved.

FIG. 4 is a flowchart of another embodiment of a method for determining a timing advance TA according to the present invention. As shown in FIG. 4, in this embodiment, the method for determining a timing advance TA according to the present invention is described by using an example in which a first transceiver node set includes a transceiver node: a first transceiver node. The method specifically includes the following:
S401. Receive downlink signal characteristic information of a first transceiver node.
S402. Detect, according to the downlink signal characteristic information of the first transceiver node, time at which a downlink signal transmitted by the first transceiver node arrives at a terminal.
S403. Determine, according to the time at which the downlink signal transmitted by the first transceiver node arrives at the terminal, a timing advance TA for transmitting an uplink signal to the first transceiver node.

The downlink signal characteristic information of the first transceiver node may be an antenna number or antenna port number of a reference signal transmitted by the first transceiver node. This is because the antenna or antenna port corresponding to each transceiver node is different, and reference signals transmitted by different antennas or antenna ports are different. Therefore, the antenna number or antenna port number for transmitting a reference signal in the first transceiver node may be transmitted to the terminal. The terminal may detect arrival time of the reference signal transmitted by the corresponding antenna or antenna port, thereby determining a timing advance TA for transmitting an uplink signal to the first transceiver node. For example, if the first transceiver node transmits a reference signal whose number is 1, the downlink signal characteristic information indicating that the number of the reference signal is 1 may be transmitted to the terminal, and the terminal may determine, by detecting the arrival time of the reference signal whose number is 1, a TA value for transmitting an uplink signal to the first transceiver node.

The downlink signal characteristic information of the first transceiver node may also be a number of a CSI-RS transmitted by the first transceiver node. The terminal may determine, by detecting the CSI-RS of the number, a TA for transmitting an uplink signal to transceiver node 1. This is because CSI-RSs transmitted by different transceiver nodes are different. Therefore, the number of the CSI-RS transmitted by the first transceiver node may be transmitted to the terminal. The terminal may determine, by detecting the CSI-RS corresponding to the number of the CSI-RS, a TA value for uplink transmission to the first transceiver node.

In a long term evolution advanced (Long Term Evolution Advanced, LTE-A) system, the frequency of transmitting a CSI-RS by the transceiver node is low, usually once per at least 5 ms, but the frequency of transmitting a CRS by the transceiver node is about once per 1 ms. Therefore, in another preferred implementation manner, after the terminal receives the number of the CSI-RS transmitted by the first transceiver node, the terminal may detect time at which the CSI-RS corresponding to the CRS number arrives at the terminal. Further, the terminal may detect, according to the time at which the CSI-RS arrives at the terminal and a time difference between the CSI-RS number and a corresponding common reference signal CRS, time at which the CRS corresponding to the CSI-RS number arrives at the terminal.

As shown in FIG 5, assuming that both transceiver node 1 and transceiver node 2 transmit a downlink signal to the terminal, the CRSs transmitted by transceiver node 1 and transceiver node 2 are the same but the transmitted CSI-RSs are different. The time difference between the CRS and the CSI-RS transmitted by either transceiver node to the terminal is usually a fixed value d. At time t1 and time t3, the terminal receives the CRS signals transmitted by transceiver node 1 and transceiver node 2 simultaneously, but the terminal does not know from which transceiver node the CRSs received at the two time points come respectively. Because the CSI-RSs transmitted by transceiver node 1 and transceiver node 2 are different, the terminal can detect from which transceiver node the received CSI-RSs come. As shown in FIG 4, the terminal may know, according to the number of the received CSI-RS, that the CSI-RS detected and received at time t2 comes from node 1 and that the CSI-RS received at time t4 comes from transceiver node 2. Because the time difference between the CRS and the CRS-RS transmitted by either transceiver node is d, the terminal can determine that the CRS received at time t1 comes from transceiver node 1 and that the CRS received at time t3 comes from transceiver node 2. If transceiver node 1 and transceiver node 2 transmit the CSI-RS at the frequency of once per 5 ms, and transmit the CRS at the frequency of once per 1 ms, after the terminal detects at a time the CSI-RS transmitted by transceiver node 1, the terminal may determine that the time at which the terminal receives the CRS transmitted by transceiver node 1 is t-d. Therefore, within the subsequent 4 ms, the terminal may detect, at time t-d+n (the value of n is 1 to 4), time of receiving the CRS. It can be seen that the terminal may use 1 ms as the frequency to determine the adjustment of the TA, thereby improving the precision of the TA adjustment of the terminal.

When the terminal accesses the cell where the first transceiver node is located, the terminal transmits an uplink signal on a shared channel of the cell within a short period of time after the terminal receives for the first time the downlink signal transmitted by the transceiver node in the cell. The first transceiver node delivers an initial TA to the terminal according to the arrival time of the uplink signal and the expected arrival time of the uplink signal. After the distance between the terminal and the first transceiver node changes, the terminal uses the initial TA for reference, and determines a TA after the change of the distance according to the sum of the initial TA and the time difference of the arrival time of the downlink signal of the first transceiver node before and after the change of the distance. As long as the distance between the terminal and the first transceiver node changes, the terminal determines the TA after the change of the distance according to the sum of the last determined TA and the time difference of arrival time of the downlink signal of the first transceiver node before and after the change of the distance.

The following uses a specific example for description. Before a change of the distance of the terminal, the transmission distance between the terminal and the first transceiver node is D₁. The downlink signal transmitted by the first transceiver node to the terminal arrives at the terminal at time T₁, and the timing advance for transmitting an uplink signal by the terminal is T_{TA1}. After the terminal moves, the transmission distance between the terminal and the first transceiver node changes to D₂. The signal transmitted by the first transceiver node to the terminal arrives at the terminal at time T₂, where T₂ = T₁ + (D₂ - D₁)/c. The terminal may determine, by detecting the change value T₂-T₁ of the arrival time of the downlink signal transmitted by the first transceiver node, that the timing advance of the uplink signal after the change of the distance is T_{TA1}+(T₂-T₁), thereby ensuring that the uplink signal transmitted by the terminal arrives at the first transceiver node at the expected time.

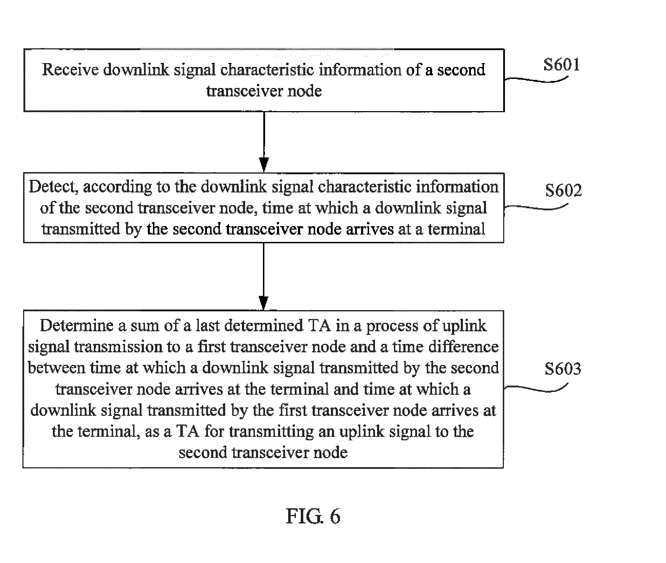

FIG. 6 is a flowchart of another embodiment of a method for determining a timing advance TA according to the present invention. As shown in FIG 6, in this embodiment, the method for determining a timing advance TA according to the present invention is described, where transceiver nodes receiving an uplink signal of a terminal change from a first transceiver node set to a second transceiver node set, where the first transceiver node set includes a first transceiver node, and the second transceiver node set includes a second transceiver node. The method specifically includes the following:
S601. Receive downlink signal characteristic information of a second transceiver node.
S602. Detect, according to the downlink signal characteristic information of the second transceiver node, time at which a downlink signal transmitted by the second transceiver node arrives at a terminal.
S603. Determine a sum of a last determined TA in a process of uplink signal transmission to the first transceiver node and a time difference between time at which a downlink signal transmitted by the second transceiver node arrives at the terminal and time at which a downlink signal transmitted by the first transceiver node arrives at the terminal, as a TA for transmitting an uplink signal to the second transceiver node.
S601 and S602 are not further described herein. For details, reference may be made to the related description in the foregoing embodiment.

The following uses a specific example to describe S603 in detail in this embodiment. If a transceiver node receiving an uplink signal of the terminal changes from transceiver node 1 to transceiver node 2, the terminal may respectively obtain a time difference T_{diff} between time at which the downlink signal transmitted by transceiver node 1 arrives at the terminal and time at which the downlink signal transmitted by transceiver node 2 arrives at the terminal. The terminal may redetermine, according to T_{diff} and the last determined TA, namely, TA_{old} in a process of uplink signal transmission to the first transceiver node, a TA_{new} for transmitting an uplink signal to transceiver node 2, where TA_{new}= TA_{old} + T_{diff}.

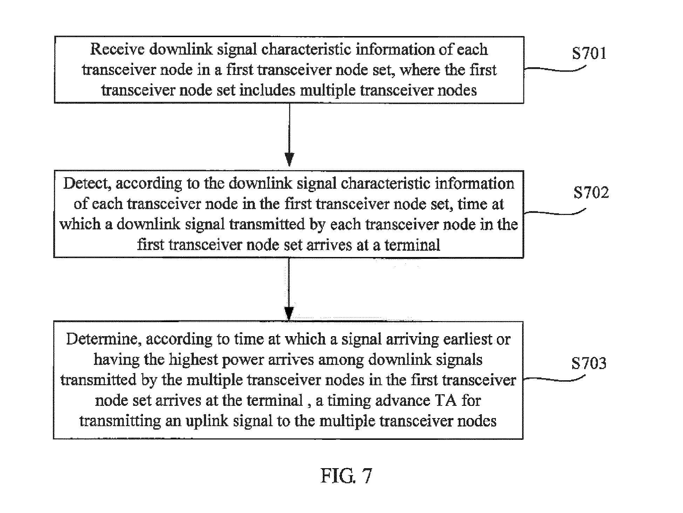

FIG 7 is a flowchart of another embodiment of a method for determining a timing advance TA according to the present invention. As shown in FIG 7, in this embodiment, the method for determining a timing advance TA according to the present invention is described by using an example in which a first transceiver node set includes multiple transceiver nodes. The method specifically includes the following:
S701. Receive downlink signal characteristic information of each transceiver node in a first transceiver node set, where the first transceiver node set includes multiple transceiver nodes.
S702. Detect, according to the downlink signal characteristic information of each transceiver node in the first transceiver node set, time at which a downlink signal transmitted by each transceiver node in the first transceiver node set arrives at a terminal.
S703. Determine, according to time at which a signal arriving earliest or having the highest power among downlink signals transmitted by the multiple transceiver nodes in the first transceiver node set arrives at the terminal, a timing advance TA for transmitting an uplink signal to the multiple transceiver nodes.
S701 and S702 are not further described herein. For details, reference may be made to the related description in the foregoing embodiment.

The following uses a specific example to describe S702 in detail in this embodiment. The cell accessed by the terminal includes 4 transceiver nodes. All transceiver nodes transmit downlink signals to the terminal. The first transceiver node set includes transceiver node 1 and transceiver node 2. The UE may determine, according to a downlink signal arriving earliest among downlink signals transmitted by transceiver node 1 and transceiver node 2, a TA for transmitting an uplink signal to transceiver node 1 and transceiver node 2.

For example, if the downlink signal transmitted by transceiver node 1 arrives at the terminal earlier than the downlink signal transmitted by transceiver node 2, the terminal may determine a TA according to the arrival time of the downlink signal transmitted by transceiver node 1.

It should be noted that if the terminal determines, according to arrival time of the downlink signal transmitted by transceiver node 1, a TA for transmitting an uplink signal to transceiver node 2, the uplink signal transmitted by the terminal arrives at transceiver node 2 after the time expected by transceiver node 2. The problem may be solved by a cyclic prefix (Cyclic Prefix, CP) technology in some existing orthogonal frequency division multiplexing (Orthogonal Frequency Division Multiplexing, OFDM) systems. Specifically, if the terminal needs to transmit uplink signals with an OFDM symbol length N: a(1), a(2), ..., a(N), after the CP technology is used, assuming that the terminal adds a cyclic prefix with a length K to the uplink signals, the uplink signals transmitted by the terminal are: a(N-K+1), a(N-K+2), ..., a(N), a(1), a(2), ..., a(N), but transceiver node 1 and transceiver node 2 receiving the uplink signals transmitted by the terminal only need to receive the uplink signals starting from OFDM symbol K+1. When the terminal transmits multiple uplink signals to which the CP with the length K is added, even if arrival of the signals at the transceiver nodes is delayed, as long as the time length of the delayed arrival is smaller than the length K of the CP, it may be ensured that no inter-symbol interference is caused to each uplink signal because all the signals with the length N starting from OFDM symbol K+1 include all required signals among a(1)-a(N).

In another feasible implementation manner, the terminal may determine, according to time at which a downlink signal having the highest power among downlink signals transmitted by transceiver node 1 and transceiver node 2 arrives at the terminal, a timing advance TA for transmitting an uplink signal to transceiver node 1 and transceiver node 2.

This is because among the transceiver nodes receiving the uplink signal transmitted by the terminal, usually a transceiver node having an optimum radio channel with the terminal or a transceiver node having a shortest distance with the terminal earliest receives the uplink signal transmitted by the terminal. Because channel conditions in uplink signal transmission and downlink signal transmission usually have same features, the terminal may determine, according to time at which a downlink signal arriving earliest or having the highest power among downlink signals transmitted by transceiver node 1 and transceiver node 2 arrives at the terminal, a TA for transmitting an uplink signal to transceiver node 1 and transceiver node 2.

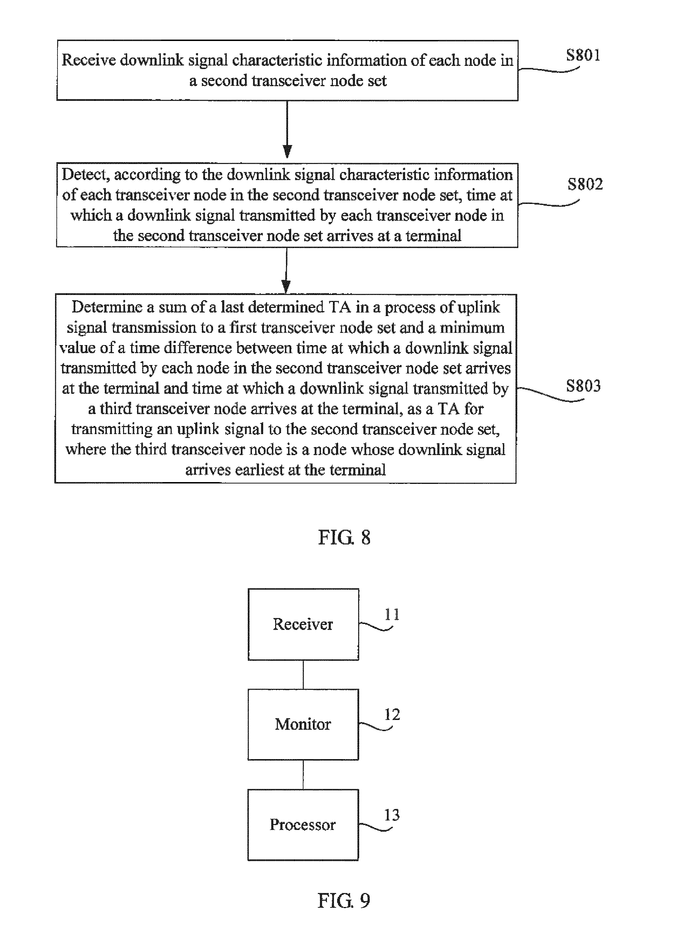

FIG. 8 is a flowchart of another embodiment of a method for determining a timing advance TA according to the present invention. As shown in FIG 8, in this embodiment, the method for determining a timing advance TA according to the present invention is described, where transceiver nodes receiving an uplink signal of a terminal change from a first transceiver node set to a second transceiver node set, where the first transceiver node set includes multiple transceiver nodes, and the second transceiver node set includes multiple transceiver nodes. The method specifically includes the following:
S801. Receive downlink signal characteristic information of each node in a second transceiver node set.
S802. Detect, according to the downlink signal characteristic information of each transceiver node in the second transceiver node set, time at which a downlink signal transmitted by each transceiver node in the second transceiver node set arrives at a terminal.
S803. Determine a sum of a last determined TA in a process of uplink signal transmission to a first transceiver node set and a minimum value of a time difference between time at which a downlink signal transmitted by each node in the second transceiver node set arrives at the terminal and time at which a downlink signal transmitted by a third transceiver node arrives at the terminal, as a TA for transmitting an uplink signal to the second node set, where the third transceiver node is a node whose downlink signal arrives earliest at the terminal.
S801 and S802 are not further described herein. For details, reference may be made to the related description in the foregoing embodiment.

The following uses a specific example to describe S803 in detail in this embodiment. If the transceiver nodes receiving the uplink signal of the terminal change from transceiver node 1 and transceiver node 2 to transceiver node 3 and transceiver node 4, where the downlink signal transmitted by transceiver node 1 arrives at the terminal earlier than the downlink signal transmitted by transceiver node 2, the terminal may respectively obtain the time differences T_{diff1} and T_{diff2} between time at which the downlink signal transmitted by transceiver node 3 arrives at the terminal and time at which the downlink signal transmitted by transceiver node 1 arrives at the terminal, and between time at which the downlink signal transmitted by transceiver node 4 arrives at the terminal and time at which the downlink signal transmitted by transceiver node 1 arrives at the terminal. The terminal may redetermine, according to the minimum value of T_{diff1} and T_{diff2}, the last determined TA, namely, TA_{old} in a process of uplink signal transmission to transceiver node 1 and transceiver node 2, and min(T_{diff1}, T_{diff2}), a TA_{new} for transmitting an uplink signal to transceiver node 3 and transceiver node 4, where TA_{new} = TA_{old} + min(T_{diff1}, T_{diff2}).

Persons of ordinary skill in the art may understand that all or a part of the processes of the methods provided in the embodiments can be implemented by hardware under the instruction of a computer program. The program may be stored in a computer readable storage medium and when the program runs, the processes of the methods in the above embodiments are executed. The storage medium may be a magnetic disk, an optical disc, a read-only memory (Read-Only Memory, ROM), or a random access memory (Random Access Memory, RAM).

FIG. 9 is a schematic structural diagram of an embodiment of a terminal executing the method for determining a timing advance TA according to the present invention. As shown in FIG 9, the terminal includes: a receiver 11, a monitor 12, and a processor 13.

The receiver 11 is configured to receive downlink signal characteristic information of each transceiver node in a first transceiver node set in a cell accessed by the terminal, where the first transceiver node set includes one or more transceiver nodes.

The monitor 12 is configured to detect, according to the downlink signal characteristic information of each transceiver node in the first transceiver node set, time at which a downlink signal transmitted by each transceiver node in the first transceiver node set arrives at the terminal.

The processor 13 is configured to determine, according to the time at which the downlink signal transmitted by each transceiver node in the first transceiver node set arrives at the terminal, a timing advance TA for transmitting an uplink signal to each transceiver node in the first transceiver node set.

The present invention further provides another embodiment of a terminal executing the method for determining a timing advance TA. On the basis of the foregoing embodiment, in a feasible implementation:
the processor 13 may be specifically configured to determine, according to time at which a signal arriving earliest or having the highest power among downlink signals transmitted by the multiple transceivers arrives at the terminal, a timing advance TA for transmitting an uplink signal to the multiple transceiver nodes.

If the transceiver nodes receiving the uplink signal of the terminal change from the first transceiver node set to a second transceiver node set, the receiver 11 may be further configured to receive downlink signal characteristic information of each node in the second transceiver node set.

The monitor 12 may be further configured to detect, according to the downlink signal characteristic information of each node in the second transceiver node set, time at which a downlink signal transmitted by each transceiver node in the second transceiver node set arrives at the terminal.

If the first transceiver node set includes a first transceiver node, and the second transceiver node set includes a second transceiver node, the processor 13 may be further configured to determine a sum of a last determined TA in a process of uplink signal transmission to the first transceiver node and a time difference between time at which a downlink signal transmitted by the second transceiver node arrives at the terminal and time at which a downlink signal transmitted by the first transceiver node arrives at the terminal, as a TA for transmitting an uplink signal to the second transceiver node.

If the first transceiver node set includes multiple transceiver nodes, and the second transceiver node set includes multiple transceiver nodes, the processor 13 may be further configured to determine a sum of a last determined TA in a process of uplink signal transmission to the first transceiver node set and a minimum value of a time difference between time at which a downlink signal transmitted by each node in the second transceiver node set arrives at the terminal and time at which a downlink signal transmitted by a third transceiver node arrives at the terminal, as a TA for transmitting an uplink signal to the second node set, where the third transceiver node is a node whose downlink signal arrives earliest at the terminal.

In a feasible implementation manner, the downlink signal characteristic information is an antenna number or antenna port number for transmitting a reference signal in the transceiver node.

Correspondingly, the monitor 12 may be specifically configured to detect time at which the reference signal corresponding to the antenna number or the antenna port number arrives at the terminal.

In another feasible implementation manner, the downlink signal characteristic information is a number of a channel state information reference signal CSI-RS transmitted by the transceiver node.

Correspondingly, the monitor 12 may be specifically configured to: detect time at which the CSI-RS corresponding to the CSI-RS number arrives at the terminal; or detect time at which the CSI-RS corresponding to a CRS number arrives at the terminal, and detect, according to the time at which the CSI-RS arrives at the terminal and the time difference between the CSI-RS number and a corresponding common reference signal CRS, time at which the CRS corresponding to the CSI-RS number arrives at the terminal.

In this embodiment, the downlink signal characteristic information may be carried in media access control MAC signaling or radio resource control RRC signaling transmitted by any one or more transceiver nodes in the accessed cell to the terminal.

The terminal according to the embodiment of the present invention corresponds to the method for determining a timing advance TA according to the embodiment of the present invention, and is a device for executing the method for determining a timing advance TA. The specific process of the method executed by the terminal is not further described herein. For details, reference may be made to the method embodiment.

The terminal provided by the embodiment of the present invention detects, according to downlink signal characteristic information of one or more transceiver nodes in an accessed cell, time at which the corresponding one or more downlink signals arrive, and thereby determines a timing advance TA for transmitting an uplink signal to the one or more transceiver nodes. Therefore, the determined TA is more accurate, an uplink signal transmitted by a UE arrives, at expected time more accurately, at a transceiver node receiving the uplink signal, and performance of the transceiver node is improved.

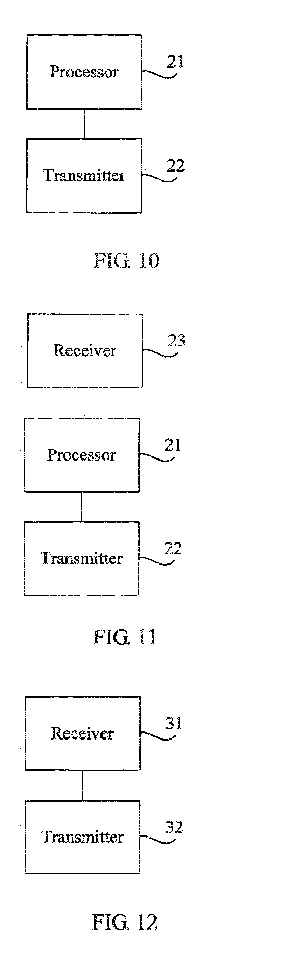

FIG. 10 is a schematic structural diagram of an embodiment of a base station executing the method for transmitting information according to the present invention. As shown in FIG. 10, the base station includes: a processor 21 and a transmitter 22.

The processor 21 is configured to determine a first transceiver node set that receives an uplink signal of a terminal, where the first transceiver node set includes one or more transceiver nodes.

The transmitter 22 is configured to transmit a first control command to one or more transceiver nodes in a cell accessed by the terminal, where the first control command is an instruction for transmitting downlink signal characteristic information of the one or more transceiver nodes in the first transceiver node set to the terminal.

FIG 11 is a schematic structural diagram of another embodiment of a base station executing the method for transmitting information according to the present invention. As shown in FIG 11, the base station includes: a processor 21 and a transmitter 22.

Further, the base station may include:
a receiver 23, configured to receive a sounding reference signal SRS reported by each transceiver node in the cell accessed by the terminal, where the SRS is an SRS transmitted by the terminal and detected by each transceiver node in the cell accessed by the terminal.

The processor 21 is specifically configured to determine, according to quality of the SRS reported by each transceiver node in the cell accessed by the terminal, the first transceiver node set that receives the uplink signal of the terminal.

The processor 21 may be further configured to determine, according to quality of the SRS reported by each transceiver node in the cell accessed by the terminal, that transceiver nodes receiving the uplink signal of the terminal change from the first transceiver node set to a second transceiver node set, where the second transceiver node set includes one or more transceiver nodes.

The transmitter 22 is further configured to transmit a second control command to one or more transceiver nodes in the cell accessed by the terminal, where the second control command is an instruction for transmitting downlink signal characteristic information of the one or more transceiver nodes in the second transceiver node set to the terminal.

The downlink signal characteristic information is an antenna number or antenna port number for transmitting a reference signal in the transceiver node, or a number of a channel state information reference signal CSI-RS transmitted by the transceiver node.

The base station according to the embodiment of the present invention corresponds to the method for transmitting information according to the embodiment of the present invention, and is a device for executing the method for transmitting information. The specific process of the method executed by the base station is not further described herein. For details, reference may be made to the method embodiment.

The base station provided by the embodiment of the present invention is used to determine a transceiver node set receiving an uplink signal of a terminal, and instruct one or more transceiver nodes in a cell accessed by the terminal to transmit downlink signal characteristic information of each transceiver node in the transceiver node set to the terminal, so that the terminal can detect arrival time of the corresponding downlink signal according to the downlink signal characteristic information of the transceiver nodes, and thereby determine a timing advance TA for transmitting an uplink signal to each node in the transceiver node set. Therefore, the determined TA is more accurate, an uplink signal transmitted by a UE arrives, at expected time more accurately, at a transceiver node receiving the uplink signal, and performance of the transceiver node is improved.

FIG. 12 is a schematic structural diagram of an embodiment of a transceiver node executing the method for transmitting information according to the present invention. As shown in FIG 12, the transceiver node includes:
a receiver 31, configured to receive a first control command transmitted by a base station, where the first control command is an instruction for transmitting downlink signal characteristic information of one or more transceiver nodes in a first transceiver node set to a terminal, where the first transceiver node set includes the one or more transceiver nodes, and the first transceiver node set includes or does not include the local transceiver node; and
a transmitter 32, configured to transmit downlink signal characteristic information of the one or more transceiver nodes in the first transceiver node set to the terminal.

Further, the receiver 31 is configured to receive a second control command transmitted by the base station, where the second control command is an instruction for transmitting downlink signal characteristic information of one or more transceiver nodes in a second transceiver node set to the terminal, where the second transceiver node set includes the one or more transceiver nodes, the second transceiver node set includes or does not include the local transceiver node, and the second transceiver node set is a transceiver node set that receives an uplink signal of the terminal after a change.

The transmitter may be further configured to transmit downlink signal characteristic information of the one or more transceiver nodes in the second transceiver node set to the terminal.

The transceiver node according to the embodiment of the present invention corresponds to the method for transmitting information according to the embodiment of the present invention, and is a device for executing the method for transmitting information. The specific process of the method executed by the transceiver node is not further described herein. For details, reference may be made to the method embodiment.

The transceiver node provided by the embodiment of the present invention transmits, according to a control command of a base station, downlink signal characteristic information of one or more transceiver nodes in a cell accessed by a terminal to the terminal. The terminal detects arrival time of the corresponding one or more downlink signals, and thereby determines a timing advance TA for transmitting an uplink signal to the one or more transceiver nodes. Therefore, the determined TA is more accurate, an uplink signal transmitted by a UE arrives, at expected time more accurately, at a transceiver node receiving the uplink signal, and performance of the transceiver node is improved.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as such modifications or replacements do not cause the essence of the corresponding technical solutions to depart from the spirit and scope of the technical solutions of the embodiments of the present invention.

## Claims

1. A method for determining a timing advance TA, comprising:
receiving downlink signal characteristic information of each transceiver node in a first transceiver node set in a cell accessed by a terminal, wherein the first transceiver node set comprises one or more transceiver nodes;
detecting, according to the downlink signal characteristic information of each transceiver node in the first transceiver node set, time at which a downlink signal transmitted by each transceiver node in the first transceiver node set arrives at the terminal; and
determining, according to the time at which the downlink signal transmitted by each transceiver node in the first transceiver node set arrives at the terminal, a timing advance TA for transmitting an uplink signal to each transceiver node in the first transceiver node set.

2. The method according to claim 1, wherein if the first transceiver node set comprises multiple transceiver nodes, the determining, according to the time at which the downlink signal transmitted by each transceiver node in the first transceiver node set arrives at the terminal, a timing advance TA for transmitting an uplink signal to each transceiver node in the first transceiver node set specifically comprises:
determining, according to time at which a signal arriving earliest or having the highest power among downlink signals transmitted by the multiple transceiver nodes arrives at the terminal, a timing advance TA for transmitting an uplink signal to the multiple transceiver nodes.

3. The method according to claim 1 or 2, wherein if transceiver nodes receiving the uplink signal of the terminal change from the first transceiver node set to a second transceiver node set, wherein the second transceiver node set comprises one or more transceiver nodes, the method further comprises:
receiving downlink signal characteristic information of each node in the second transceiver node set; and
detecting, according to the downlink signal characteristic information of each node in the second transceiver node set, time at which a downlink signal transmitted by each transceiver node in the second transceiver node set arrives at the terminal.

4. The method according to claim 3, wherein: if the first transceiver node set comprises a first transceiver node, and the second transceiver node set comprises a second transceiver node, after the detecting, according to the downlink signal characteristic information of each node in the second transceiver node set, time at which a downlink signal transmitted by each transceiver node in the second transceiver node set arrives at the terminal, the method further comprises:
determining a sum of a last determined TA in a process of uplink signal transmission to the first transceiver node and a time difference between time at which a downlink signal transmitted by the second transceiver node arrives at the terminal and time at which a downlink signal transmitted by the first transceiver node arrives at the terminal, as a TA for transmitting an uplink signal to the second transceiver node;
or, if the first transceiver node set comprises multiple transceiver nodes, and the second transceiver node set comprises multiple transceiver nodes, after the detecting, according to the downlink signal characteristic information of each node in the second transceiver node set, time at which a downlink signal transmitted by each transceiver node in the second transceiver node set arrives at the terminal, the method further comprises:
determining a sum of a last determined TA in a process of uplink signal transmission to the first transceiver node set and a minimum value of a time difference between time at which a downlink signal transmitted by each node in the second transceiver node set arrives at the terminal and time at which a downlink signal transmitted by a third transceiver node arrives at the terminal, as a TA for transmitting an uplink signal to the second node set, wherein the third transceiver node is a node whose downlink signal arrives earliest at the terminal, in the first transceiver node set.

5. The method according to any one of claims 1 to 4, wherein: the downlink signal characteristic information is an antenna number or antenna port number of a reference signal transmitted by the transceiver node; and
the detecting time at which a downlink signal arrives at the terminal specifically comprises:
detecting time at which the reference signal corresponding to the antenna number or antenna port number arrives at the terminal;
or, the downlink signal characteristic information is a number of a channel state information reference signal CSI-RS transmitted by the transceiver node; and
the detecting time at which a downlink signal arrives at the terminal specifically comprises:
detecting time at which the CSI-RS corresponding to the CSI-RS number arrives at the terminal;
or, detecting time at which the CSI-RS corresponding to the CRS number arrives at the terminal, and detecting, according to the time at which the CSI-RS arrives at the terminal and a time difference between the CSI-RS number and a corresponding common reference signal CRS, time at which the CRS corresponding to the CSI-RS number arrives at the terminal.

6. The method according to any one of claims 1 to 5, wherein the downlink signal characteristic information is carried in media access control MAC signaling or radio resource control RRC signaling transmitted by any one or more transceiver nodes in the accessed cell to the terminal.

7. A method for transmitting information, comprising:
determining a first transceiver node set that receives an uplink signal of a terminal, wherein the first transceiver node set comprises one or more transceiver nodes; and
transmitting a first control command to one or more transceiver nodes in a cell accessed by the terminal, wherein the first control command is an instruction for transmitting downlink signal characteristic information of the one or more transceiver nodes in the first transceiver node set to the terminal.

8. The method according to claim 7, wherein the determining a first transceiver node set that receives an uplink signal of a terminal specifically comprises:
receiving a sounding reference signal SRS reported by each transceiver node in the cell accessed by the terminal, wherein the SRS is an SRS transmitted by the terminal and detected by each transceiver node in the cell accessed by the terminal; and
determining, according to quality of the SRS reported by each transceiver node in the cell accessed by the terminal, the first transceiver node set that receives the uplink signal of the terminal.

9. The method according to claim 7 or 8, further comprising:
determining, according to quality of the SRS reported by each transceiver node in the cell accessed by the terminal, that transceiver nodes receiving the uplink signal of the terminal change from the first transceiver node set to a second transceiver node set, wherein the second transceiver node set comprises one or more transceiver nodes; and
transmitting a second control command to one or more transceiver nodes in the cell accessed by the terminal, wherein the second control command is an instruction for transmitting downlink signal characteristic information of the one or more transceiver nodes in the second transceiver node set to the terminal.

10. The method according to any one of claims 7 to 9, wherein the downlink signal characteristic information is an antenna number or antenna port number of a reference signal transmitted by the transceiver node, or is a number of a channel state information reference signal CSI-RS transmitted by the transceiver node.

11. A method for transmitting information, comprising:
receiving a first control command transmitted by a base station, wherein the first control command is an instruction for transmitting downlink signal characteristic information of one or more transceiver nodes in the first transceiver node set to the terminal, wherein the first transceiver node set comprises the one or more transceiver nodes, and the first transceiver node set comprises or does not comprise a local transceiver node; and
transmitting downlink signal characteristic information of the one or more transceiver nodes in the first transceiver node set to the terminal.

12. The method according to claim 11, wherein the method further comprises:
receiving a second control command transmitted by the base station, wherein the second control command is an instruction for transmitting downlink signal characteristic information of one or more transceiver nodes in the second transceiver node set to the terminal, wherein the second transceiver node set comprises the one or more transceiver nodes, the second transceiver node set comprises or does not comprise the local transceiver node, and the second transceiver node set is a transceiver node set that receives an uplink signal of the terminal after a change; and
transmitting downlink signal characteristic information of the one or more transceiver nodes in the second transceiver node set to the terminal.

13. The method according to claim 11 or 12, wherein the downlink signal characteristic information is carried in media access control MAC signaling or radio resource control RRC signaling transmitted to the terminal.

14. A terminal, comprising:
a receiver, configured to receive downlink signal characteristic information of each transceiver node in a first transceiver node set in a cell accessed by the terminal, wherein the first transceiver node set comprises one or more transceiver nodes;
a monitor, configured to detect, according to the downlink signal characteristic information of each transceiver node in the first transceiver node set, time at which a downlink signal transmitted by each transceiver node in the first transceiver node set arrives at the terminal; and
a processor, configured to determine, according to the time at which the downlink signal transmitted by each transceiver node in the first transceiver node set arrives at the terminal, a timing advance TA for transmitting an uplink signal to each transceiver node in the first transceiver node set.

15. The terminal according to claim 14, wherein the processor is specifically configured to:
determine, according to time at which a signal arriving earliest or having the highest power among downlink signals transmitted by the multiple transceiver nodes arrives at the terminal, a timing advance TA for transmitting an uplink signal to the multiple transceiver nodes.

16. The terminal according to claim 14 or 15, wherein: the receiver is further configured to receive downlink signal characteristic information of each node in the second transceiver node set, wherein the second transceiver node set is a transceiver node set that receives an uplink signal of the terminal after a change; and
the monitor is further configured to detect, according to the downlink signal characteristic information of each node in the second transceiver node set, time at which a downlink signal transmitted by each transceiver node in the second transceiver node set arrives at the terminal.

17. The terminal according to claim 16, wherein: if the first transceiver node set comprises a first transceiver node, and the second transceiver node set comprises a second transceiver node, the processor is further configured to determine a sum of a last determined TA in a process of uplink signal transmission to the first transceiver node and a time difference between time at which a downlink signal transmitted by the second transceiver node arrives at the terminal and time at which a downlink signal transmitted by the first transceiver node arrives at the terminal, as a TA for transmitting an uplink signal to the second transceiver node;
or, if the first transceiver node set comprises multiple transceiver nodes, and the second transceiver node set comprises multiple transceiver nodes, the processor is further configured to determine a sum of a last determined TA in a process of uplink signal transmission to the first transceiver node and a minimum value of a time difference between time at which a downlink signal transmitted by each node in the second transceiver node set arrives at the terminal and time at which a downlink signal transmitted by a third transceiver node arrives at the terminal, as a TA for transmitting an uplink signal to the second transceiver node set, wherein the third transceiver node is a node whose downlink signal arrives earliest at the terminal, in the first transceiver node set.

18. The terminal according to any one of claims 14 to 17, wherein: the downlink signal characteristic information received by the receiver is an antenna number or antenna port number of a reference signal transmitted by the transceiver node; and the monitor is specifically configured to detect time at which the reference signal corresponding to the antenna number or antenna port number arrives at the terminal;
or, the downlink signal characteristic information received by the receiver is a number of a channel state information reference signal CSI-RS transmitted by the transceiver node; and the monitor is specifically configured to detect time at which the CSI-RS corresponding to the CSI-RS number arrives at the terminal, or specifically configured to detect time at which the CSI-RS corresponding to the CRS number arrives at the terminal, and detect, according to the time at which the CSI-RS arrives at the terminal and a time difference between the CSI-RS number and a corresponding common reference signal CRS, time at which the CRS corresponding to the CSI-RS number arrives at the terminal.

19. A base station, comprising:
a processor, configured to determine a first transceiver node set that receives an uplink signal of a terminal, wherein the first transceiver node set comprises one or more transceiver nodes; and
a transmitter, configured to transmit a first control command to one or more transceiver nodes in a cell accessed by the terminal, wherein the first control command is an instruction for transmitting downlink signal characteristic information of the one or more transceiver nodes in the first transceiver node set to the terminal.

20. The base station according to claim 19, further comprising:
a receiver, configured to receive a sounding reference signal SRS reported by each transceiver node in the cell accessed by the terminal, wherein the SRS is an SRS transmitted by the terminal and detected by each transceiver node in the cell accessed by the terminal, wherein
the processor is specifically configured to determine, according to quality of the SRS reported by each transceiver node in the cell accessed by the terminal, the first transceiver node set that receives the uplink signal of the terminal.

21. The base station according to claim 19 or 20, wherein: the processor is further configured to determine, according to quality of the SRS reported by each transceiver node in the cell accessed by the terminal, that transceiver nodes receiving the uplink signal of the terminal change from the first transceiver node set to a second transceiver node set, wherein the second transceiver node set comprises one or more transceiver nodes; and
the transmitter is further configured to transmit a second control command to one or more transceiver nodes in the cell accessed by the terminal, wherein the second control command is an instruction for transmitting downlink signal characteristic information of the one or more transceiver nodes in the second transceiver node set to the terminal.

22. The base station according to any one of claims 19 to 21, wherein the downlink signal characteristic information is an antenna number or antenna port number of a reference signal transmitted by the transceiver node, or is a number of a channel state information reference signal CSI-RS transmitted by the transceiver node.

23. A transceiver node, comprising:
a receiver, configured to receive a first control command transmitted by a base station, wherein the first control command is an instruction for transmitting downlink signal characteristic information of one or more transceiver nodes in a first transceiver node set to the terminal, wherein the first transceiver node set comprises the one or more transceiver nodes, and the first transceiver node set comprises or does not comprise the local transceiver node; and
a transmitter, configured to transmit downlink signal characteristic information of the one or more transceiver nodes in the first transceiver node set to the terminal.

24. The transceiver node according to claim 23, wherein:
the receiver is further configured to receive a second control command transmitted by the base station, wherein the second control command is an instruction for transmitting downlink signal characteristic information of one or more transceiver nodes in the second transceiver node set to the terminal, wherein the second transceiver node set comprises the one or more transceiver nodes, the second transceiver node set comprises or does not comprise the local transceiver node, and the second transceiver node set is a transceiver node set that receives an uplink signal of the terminal after a change; and
the transmitter is further configured to transmit downlink signal characteristic information of the one or more transceiver nodes in the second transceiver node set to the terminal.
